# EUROPEAN PATENT SPECIFICATION

(11) **EP 2 489 290 B1**
(45) Date of publication and mention of the grant of the patent: **03.12.2014**
(21) Application number: 11425035.0
(22) Date of filing: 18.02.2011
(51) Int. Cl.: A47J 31/54, F24H 9/20

(54) **An improved system for heating the water in a boiler and a respective method**
Verbessertes System zum Erhitzen von Wasser in einem Boiler sowie zugehöriges Verfahren
Système amélioré pour chauffer de l'eau dans une chaudière et procédé correspondant

(43) Date of publication of application: 22.08.2012
(73) Proprietor: Gruppo Cimbali S.p.A., 20082 Binasco (MI) (IT)
(72) Inventor: Rossetti, Sara, 20082 Binasco, MI (IT); Sampaoli, Davide, 20082 Binasco, MI (IT)
(74) Representative: Perani, Aurelio

(56) References cited:
- EP-A2- 0 943 877
- US-A1- 2008 273 868
- US-A1- 2008 285 964

## Description

### TECHNICAL FIELD

The present invention relates to an improved system for heating the water in a boiler and to a respective method.

### BACKGROUND ART

A discussion of documents, records, materials, devices, articles and the like is included in the specification purely in order to provide a context for the present invention. It is neither suggested nor intended that these subjects form part of the prior art *in* toto or in part or were general knowledge in the field of the present invention as existing prior to the priority date of any claim of this application.

Espresso coffee machines normally enable other types of hot beverages to be prepared as well as espresso coffee, possibly simultaneously or in rapid succession. These machines normally have storage heaters (or boilers) so that a certain amount of water is always hot.

However, at each supply of beverage, hot water is taken from the heater and is replaced by an equal quantity of cold water which contributes to a reduction in the mean temperature of the water contained in the boiler.

Since the heat in the boiler is never distributed instantaneously, however, the hot and cold water become layered inside the boiler, with the result that the unit for monitoring the temperature in the boiler (which unit is normally connected to a thermometer) may not correctly receive the information that the beverage has been supplied and the boiler contents consequently cooled.

It is also important that the temperature of the water in the boiler does never exceed a predetermined value (for example, 90°C) since, if it did, the excessive heat could spoil the final flavour of the beverage supplied. **An example of existing solution is described in document** US2008/273868**.**

The currently existing solutions can neither make best use of the power installed nor guarantee a constant temperature of the water contained in the boiler, resulting in variations in beverage quality.

In view of the prior art described, the objective of the present invention is to provide a system for heating the water in a boiler as well as a method of heating the water in a boiler which permit greater efficiency in the use of the available power in a coffee machine.

The present invention also affords advantages in terms of ease of production, greater durability, greater compactness and/or greater versatility.

### SUMMARY OF THE INVENTION

According to the present invention, this objective is achieved by means of a method of heating water according to Claim 1 and a coffee machine according to Claim 12.

### BRIEF DESCRIPTION OF THE DRAWINGS

The characteristics and the advantages of the present invention will become clear from the following detailed description of a practical embodiment which is given by way of non-limiting example with reference to the appended drawings, in which:

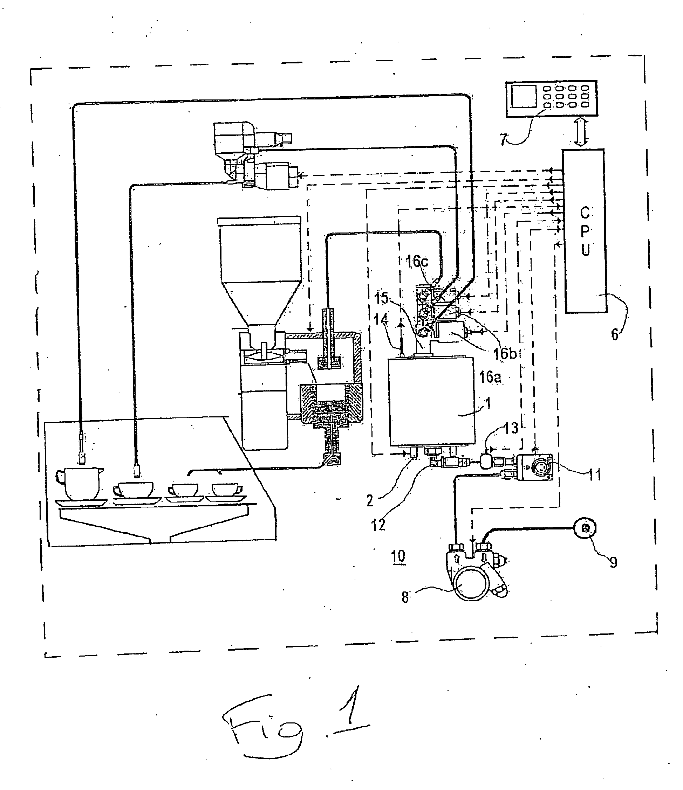

Figure 1 is a schematic view of a coffee machine according to a preferred embodiment of the present invention;
Figure 2 is a schematic view of the boiler 1 of Figure 1, connected to a coffee machine 10;
Figure 3 shows an example of how the power lost by the boiler of Figure 1 is added up over time, in an example of multiple beverages supply;
Figure 4 shows the time trace of the power lost by the boiler of Figure 1 in the supply example of Figure 3;
Figure 5 shows an illustrated example of a method of performing a calculation according to the present invention; and
Figure 6 shows the time trace of the power delivered by the heater, according to an embodiment of the present invention.

### DETAILED DESCRIPTION

Even if it is not pointed out explicitly, the individual features that are described with reference to the specific embodiments should be understood as being supplementary to and/or interchangeable with other features described with reference to other embodiments.

Machines for supplying espresso coffee are devices which also enable hot beverages of other types to be prepared. This term also includes vending machines which can supply hot beverages as a result of a payment made via payment means included in the machine.

As will also become clear from the following, the teachings of the present invention, which are described with reference to a coffee machine, should be understood as also extending to machines which can also supply beverages other than coffee or even to machines which can supply solely beverages other than coffee; likewise, although vending machines are not expressly mentioned, the present invention can clearly also be applied to devices which can supply hot beverages as a result of a payment made via payment means arranged in the device.

A coffee machine 10 normally comprises a hot-water preparation unit comprising a boiler 1 and a heater 2, for example, a resistor.

For the purposes of the present invention, "boiler" means a device which can hold water and increase its temperature without, however, producing saturated steam; the boiler may, for example, be designed to operate normally below 100°C, for example, above 70°C, above 80°C, and preferably at about 90°C, but working temperatures above 100°C are also possible when the pressure of the water contained in the boiler 1 is above the saturated vapour pressure for the operating temperature (for example, at 120°C and 2 bars relative pressure).

The function of producing saturated steam is demanded to different devices, known as steam generators, which may be present in coffee machines, in addition to the boiler 1.

The boiler 1 comprises a water inlet 12 and a water outlet 15; the heater 2 may be inside the boiler 1 so as to be immersed in the water contained in the boiler 1 but other configurations are possible.

Advantageously, the water inlet 12 is in the lower portion of the boiler 1 whereas the water outlet 15 is in the upper portion of the boiler 1.

The vertical axis is defined with respect to the expected positioning of the boiler 1 in use, so that the hot water will tend to rise relative to the denser cold water.

The boiler 1 advantageously has a cylindrical shape; in this case, the water inlet 12 and/or outlet 15 may be arranged in the upper and lower end walls of the boiler 1, respectively.

Alternative embodiments within the capabilities of experts in the art, for example, with a horizontal axis or of spherical shape are, however, possible.

The heater 2 is advantageously arranged in the lower portion of the boiler 1, although an embodiment in which the heater 2 is spread out in the internal space is also possible.

The water inlet 12 of the boiler 1 may be connected to a source of water under pressure, for example, a pump which in turn is connected to the water mains or to a reservoir, whereas the water outlet 15 may be connected to the beverage preparation and supply system. All of the connections are formed by means of respective ducts, in known manner.

In a preferred embodiment, the boiler 1 is supplied with cold water by means of a pump 8.

The boiler 1 may comprise a first temperature sensor 14 arranged in the vicinity of the water outlet and, optionally, a second temperature sensor 13 arranged in the vicinity of the water inlet.

The first temperature sensor 14 may advantageously be a thermocouple, for example, fitted in a sheath preferably having a diameter of between 0.5 and 2 mm, for example, about 1 mm; the second temperature sensor 13 may be formed in the same manner.

The capacity of the boiler 1 may vary, for example, from approximately half a litre to about eight/ten litres, according to the size of the machine.

The maximum power that can be delivered by the heater 2 may be at least 1 kW or more, for example, 3 kW. The present invention advantageously relates to machines in which the heater 2 has a maximum deliverable power of less than 5 kW and/or more than 1 kW.

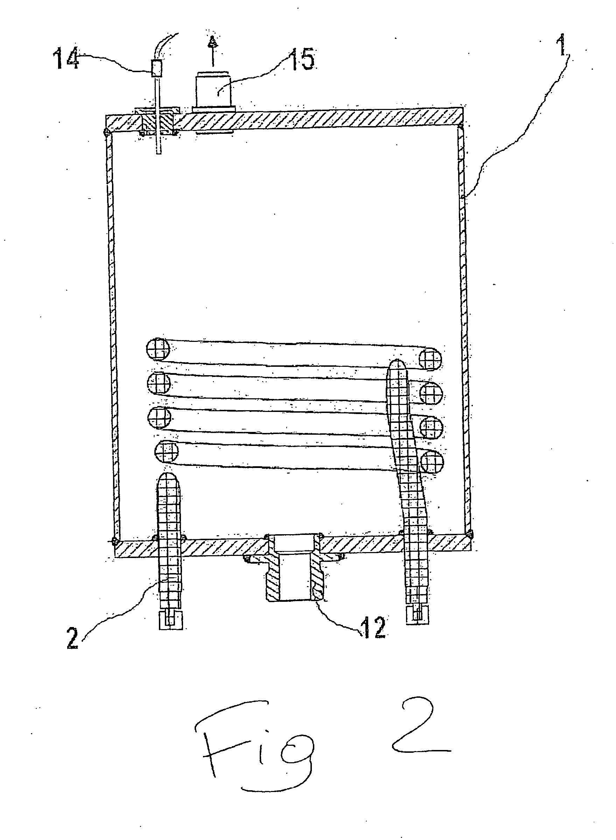

The beverage preparation and supply system may comprise one or more of the following units:
- a supplier of conventional coffee, for example, working with ground coffee, pre-packaged pods or capsules, or soluble coffee,
- a supplier of soluble beverages such as, for example, chocolate,
- a lance for supplying hot water;
- a device for concentrated products such as, for example, that illustrated in Figure 2 of EP2055215,
- a beverage selection device 7.

Further elements are:
- a control unit 6, for example, connected to the active components of the machine in order to receive information and transmit commands;
- a pump 8 which can be supplied by a source 9 of cold drinking water, for example, a water-system tap, and the output of which is connected to the inlet 12 of the boiler 1 by means of a duct;
- a flow-rate transducer 11 which, for example, is interposed between the pump 8 and the inlet 12 of the boiler 1, and is connected to the control unit 6 in order to transmit thereto a signal representative of the flow-rate of water passing through the transducer 11, for example, sending a pulse for each predetermined quantity of water (for example, of 0.5 CM³) so that, by counting the received pulses, the control unit 6 can establish the quantity of water sent to the suppliers and hence meter each beverage in accordance with the appropriate functions stored in the control unit 6. The frequency of the pulses is directly proportional to the flow-rate of water (the flow-rate transducer 11 may be incorporated in, or considered to be incorporated in, the pump 8);
- at least one solenoid valve 16a, 16b, 16c, arranged downstream of the boiler 1, for each beverage supply duct, in order to control the supply of the beverages.

The second temperature sensor 13 is advantageously situated along one of the ducts for supplying cold water to the boiler 1, preferably in the vicinity of the boiler 1, for example, downstream of the pump 8, more preferably downstream of the flow-rate transducer 11.

The control unit 6 is advantageously in signal communication with the pump 8, with the heater 2, with the beverage selection device 7, with the first temperature sensor 14 and/or with the second temperature sensor 13.

The supply process is started by the selection of the desired beverage, for example, by means of a key of a keypad of the beverage selection device 7. The signal representative of the beverage selected is communicated to the control unit 6.

After receiving the signal representative of the selected beverage, the control unit 6 provides, in a known manner, for the loading of the measure of product, if necessary (it is not necessary, for example, for the teapot).

The control unit then starts the pump 8 and activates the solenoid valve 16 corresponding to the beverage selected.

The cold water, impelled by the pump 8, enters the boiler 1 through the transducer 11 and urges the hot water towards the outlet 15. The hot water then continues, in known manner, to the supplier corresponding to the beverage selected.

Since the preparation of each beverage requires a specific quantity of hot water, the energy that is necessary for the preparation of that beverage can be considered a component, in the same manner as the water or the nutritive ingredients which make up the beverage.

This energy is equal to the energy that is extracted from the boiler 1 during the preparation of the beverage, which is equal to the difference between the energy that is taken from the boiler 1 and the energy which is introduced thereto for preparing the beverage, which in turn is proportional to the quantity of water that is replaced in the boiler, as well as to the temperature difference between the hot water removed and the cold water introduced.

Since the amount of water used is determined by the type of beverage to be supplied and the temperatures can be known, for example, by means of the first and second temperature sensors 13, 14, the energy extracted from the boiler 1 for the preparation of each beverage can be determined.

Moreover, bearing in mind that the temperature of the water introduced into the boiler 1 has been found to be substantially constant, for example 15°C ± 2°C, the input temperature can be approximated with good accuracy by a constant value and, according to one possible embodiment, the coffee machine 10 can therefore be constructed without the second temperature sensor 13 or its signal can be ignored.

Furthermore, since the temperature at which the water is removed from the boiler 1 has to be substantially constant, for example, about 90°C, the extraction temperature can be approximated by a constant value.

Purely for the purposes of the calculation according to the present invention, the temperature value detected by the first temperature sensor 14 can therefore also be ignored and, in practice, can be used purely to prevent overheating.

If it is decided to consider both the input temperature and the extraction temperature as constant values, once the amount of water required to prepare each beverage is known, the amount of heat extracted from the boiler 1 can therefore be approximated by a constant value.

When the data signals from the first temperature sensor 14 and/or from the second temperature sensor 13 are available, that value can be determined more accurately at any moment.

Since, in theory, the supply of water for the preparation of each beverage has to take place at a predetermined flow-rate, it will, in theory, be possible to determine the power extracted from the boiler 1 for the preparation of each beverage.

In practice, however, the flow-rate of water actually used for the preparation of each beverage may vary. For example, the particle size of ground coffee may vary as a result of variations in air humidity: if the setting of the coffee machine is not opportunely adjusted, the variation in the beverage supply time with respect to the theoretical time may also be considerable.

Other causes of variation of the supply time may be, for example, residues of product choking the supply ducts.

In these cases, a more precise estimate of the power extracted from the boiler 1 can be obtained by utilizing the signal generated by the flow-rate transducer 11.

The control unit 6 therefore comprises means which can detect precise variations in the flow-rate of the flow supplied on the basis of the signal generated by the flow-rate transducer 11.

The flow-rate transducer 11 thus enables the power delivered by the heater 2 to the boiler 1 to be modulated depending not on the average power extracted from the boiler 1 during the entire supply operation but on the instantaneous power, in practice, the power extracted during a single pulse of the flow-rate transducer 11.

A more precise method of calculating the power removed from the boiler 1 can thus provide, for each pulse sent from the flow-rate transducer 11 to the control unit 6, for the detection of the input and removal temperature, the calculation of the temperature difference and, since the heat capacity of water and the amount (mass or volume) of water corresponding to a pulse of the transducer 11 are known, for the determination of the amount of heat extracted; the instantaneous power extracted can be calculated by dividing this value (which is equal to the heat lost by the boiler 1 owing to the replacement of a measure of hot water with an equal measure of cold water) by the time elapsed between one pulse and another.

The calculation set out above can be simplified if one or more of the following quantities are considered to be constant:
- the flow-rate of water required for each particular beverage,
- the density of the water in the temperature range provided for;
- the water extraction temperature;
- the water input temperature;
- the heat capacity of the water in the temperature and/or pressure range provided for.

In this case, it is possible to associate with each beverage an " characteristic energy " Qc which, in the most simplified version, depends solely on the beverage.

For example, a quantity of 25g of ristretto Italian espresso coffee is supplied into a cup in 25 s, at a temperature of 82°C,: taking account of the heat losses due to dissipation, to the water that is retained in the used grounds, and to the residual water that is contained in the ducts which are emptied upon completion of the process, 50 g of water at 90°C are found to be required to produce such an espresso coffee.

The total energy required will therefore be 4.36125 Wh.

In order to arrange for the heating to take place in 25 s, it is necessary to develop a power of 0.628 kW.

Similarly, for a *café crème* (130 g of water at 90°C in 25 s) the characteristic energy Qc will be 11.34 Wh, which is equal to a mean theoretical power of 1.6 kW delivered for 25 s) .

For a soluble beverage, 100 g of water are supplied into a cup (in 12 s); 8.72 Wh (equal to a mean theoretical power of 2.6 kW delivered for 12 s) will therefore be required.

For a tea, in which 200g of water are supplied in 10 s by means of a lance, the characteristic energy Qc is 17.45 Wh (equal to a power of 6.3 kW delivered for 10 s).

If the drawn power Pp is defined as the power which the boiler 1 loses during the supply of beverages, without taking into account the effects of the heater 2, it is clear that the drawn power Pp will be equal to the sum, moment by moment, of the power drawn for each beverage being supplied.

The power input to the boiler 1 is equal to the delivered power Pe delivered by the heater 2 and is limited to the maximum power Pmax that can be delivered by it.

It is desirable that the delivered power Pe has a value as close as possible to the drawn power Pp, without exceeding it.

The control unit 6 generates a signal to increase and/or reduce the delivered power Pe delivered by the heater 2 by means of a function which may have the drawn power Pp (or the energy characteristic Qe) as input.

This function is predefined and is, for example, stored in the control unit 6 itself.

In known coffee machines, the determination of the precise moment at which to turn the heater 2 on and off was based on complex interactions between cold and hot water in the boiler 1.

With the present invention, on the other hand, the fluid-dynamic behaviour of the water inside the boiler 1 does not affect the moments at which the delivered power Pe, delivered by the heater 2, is increased and/or reduced.

The advantage of the present invention is thus to eliminate the delays and deviations which the above-mentioned fluid-dynamic phenomena produce.

By defining the available power Pd as the difference between the maximum power Pmax and the delivered power Pe, delivered by the heater 2, the moments at which the delivered power Pe, delivered by the heater 2, is increased and/or reduced are determined by checking one or more of the following conditions over time:
- if Pp≤Pmax, the control unit 6 sets Pe = Pp;
- if Pp>Pmax, the control unit 6 sets Pe = Pmax.

In this case Pp - Pmax represents a power which is removed from the boiler 1 and is not compensated for by the heater 2; the energy corresponding to that non-compensated power will be delivered by the heater 2 after completion of the supply of the beverage.

The supply preferably takes place at a power equal to the maximum power Pmax of the heater 2 for the necessary time (which depends on the simultaneous supply of other beverages during compensation).

Thus, for the supply of a single beverage for which Pp≤Pmax, the control unit 6 will set Pe = Pp throughout the supply period Te.

For the supply of a single beverage for which Pp≥Pmax, on the other hand, the control unit 6 will be able to set Pe = Pmax throughout the supply period Te and will not switch the heater 2 off until a moment subsequent to Te, so as to compensate for the amount of heat that has been taken from the boiler 1 and has not yet been compensated for by means of the heater 2.

The determination of the moment at which the heater 2 is switched off depends on the function stored in the control unit 6: when, during the compensation step, the function provides for Pe = Pmax, the period for which the heater 2 is switched on after completion of the supply of the beverage will be the minimum possible; other values of Pe are, however, possible by modulating the delivered power Pe delivered by the heater 2 in known manner, provided that the corresponding increases in the time required to compensate for the heat lost by the water in the boiler 1 are taken into account.

As an example of modulation, it is possible to divide operation into pulses, for example of fixed period, for example, of 0.2 s and, during each pulse, to vary the ratio between the intervals during which the heater is switched on and is switched off.

Naturally, the calculations that are required to assess the moments at which to increase and reduce the delivered power Pe may be performed at the moment when the beverage is selected, provided that the supply flow-rate is considered to be constant.

If, on the other hand, any variations in flow-rate are to be taken into consideration, the calculations shall be performed substantially continuously by checking whether the drawn power Pp is greater than or less than the maximum power Pmax and possibly by keeping track of the energy that has not been compensated for up to that moment.

The control unit 6 may comprise a function which determines the operation of the heater 2 over time, not by adjusting the delivered power Pe but, for example, the current, the voltage, or any other parameter which, in known manner, must be set in order to control the delivered power Pe by the heater 2.

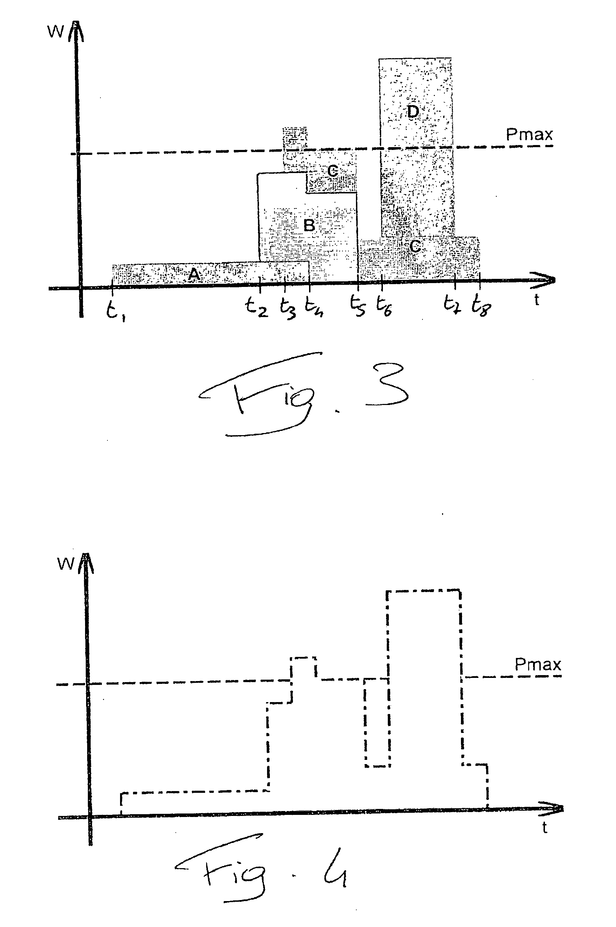

Figures 3-6 graphically illustrate the above-described method in a supply situation shown by way of example in Figure 3 in which a first beverage A, for example, an espresso, is supplied from time t1 to time t4, a second beverage B, for example, a chocolate, is supplied from time t2 to time t5, a third beverage C, for example, a *café crème,* is supplied from time t3 to time t8, and a fourth beverage D, for example, a tea, is supplied from time t6 to time t8.
Figure 3 shows graphically the powers Pp taken for each beverage A, B, C, D, algebraically summed. The result of the sum, which can be seen in Figure 4, shows that the sum of the powers Pp taken from the boiler 1 is greater than the maximum power Pmax that can be delivered by the heater 2, at least in some periods.

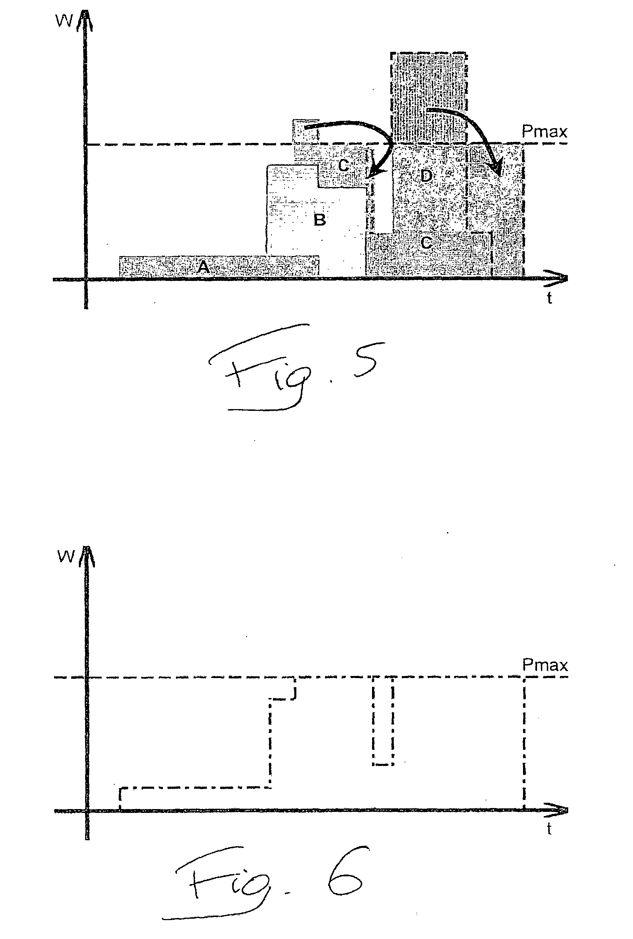

Figure 5 shows the steps which the control unit 6 can perform, that is, to keep track of the amount of heat which has not been delivered and "shift it" to the earliest possible moment.

Since the amount of heat is equal to the power multiplied by the time, that is, to the area of the graph surfaces, the surfaces indicated by the arrows have different shapes but the same area.

Even if the drawn power Pp drawn from the boiler 1 cannot be completely compensated by means of the heater 2 since Pmax<Pp, the difference is made up as soon as possible, keeping the water in the boiler 1 always in optimal conditions for further supplies.

The time trace of the delivered power Pe delivered by the heater 2 is shown in Figure 6. It will be noted that, according to this embodiment, the amount of heat delivered is never greater than that removed, so as to avoid overheating.

Clearly, in order to satisfy contingent and specific requirements, a person skilled in the art will be able to apply many modifications and variants to the configurations described above.

For example, as an alternative or in addition to the flow-rate transducer upstream of the boiler 1, it is possible to have a flow-rate transducer downstream thereof, or a flow-rate transducer arranged in each independent supply duct to permit, for example, the simultaneous supply of several beverages. In the latter case, naturally, the signal representative of the flow-rate output by the boiler 1 will be given by the sum of the individual flow-rates output in each supply duct.

The delivered power Pe may also be less than the values indicated in the text, for example, by several percentage points, for example, between 3% and 7%.

Similarly, with delivered power Pe, it is possible to consider either the instantaneous power value or the average value within a relatively short period of time. For example, the heater 2 may be formed in a manner such that a delivered power Pe which is less than the maximum power Pmax is obtained by modulating the supply of a power equal to the maximum power over short periods (for example, of a few hundred milliseconds, for example 200 ms). A delivered power Pe which is less than the maximum power Pmax is thus obtained by modulating the fraction of a period during which the maximum power is delivered. Given the thermal inertias involved, modulation for such short periods is comparable to a continuous power variation.

This method of varying the delivered power Pe, as well as alternative methods equivalent thereto, are in fact well known to experts in the art. An understanding of the present invention and of the respective claims should not therefore be influenced by the particular embodiment adopted for modulating the delivered power Pe.

Likewise, all heat losses of the boiler 1 have been ignored in this description. Such heat losses increase the value of the drawn power Pp by an amount which, as a first approximation, is small and negligible but which can certainly be determined for each individual boiler and each temperature range. Naturally, in practice, it will be possible to define a function which takes account of these and other losses.

However, all of these variants and modifications are included within the scope of protection of the invention as defined by the appended claims.

## Claims

1. A method for supplying hot beverages comprising supplying hot water, wherein supplying hot water comprises the steps of:
(a) providing a device for heating water, the device comprising:
- a boiler (1) suitable for containing water and comprising an inlet (12) and an outlet (15) which are suitable, respectively, for introducing water into the boiler (1) and for removing water therefrom;
- a heater (2) suitable for suppling energy to the water contained in the boiler (1) so as to increase the temperature of the water;
- a control unit (6) which can generate a signal for the increase of the delivered power (Pe) supplied by the heater (2) and a signal for the reduction thereof;
- one or more flow-rate transducers (1) which can generate respective signals that are representative of the flow-rate of water input to and/or output from the boiler (1),
- the flow-rate transducer (11) being in signal communication with the control unit (6),
the control unit (6) generating the signals for the increase and/or reduction of the delivered power (Pe) delivered by the heater (2) by processing the signal that is representative of the flow-rate that is sent by the flow-rate transducer (11), the processing taking place by means of a function stored in the control unit (6); **characterized in that**
the control unit (6) determines a value representative of the total energy not compensated for by the heater (2), which is substantially equal to the integral over time of the difference between the drawn power (Pp) taken from the boiler (1) and the delivered power (Pe) delivered by the heater (2);
wherein when the value representative of the total energy not compensated for by the heater (2) is equal to zero, the delivered power (Pe) is never greater than the drawn power (Pp).

2. A method according to the preceding claim wherein said function determines the moment at which the delivered power (Pe) delivered by the heater (2) is increased and/or reduced by considering one or more independent parameters selected from the group comprising:
- the flow-rate of the water admitted to the boiler (1);
- the maximum power (Pmax) that can be delivered by the heater (2);
- the water temperature difference between the inlet to the boiler (1) and the outlet from the boiler (1).

3. A method according to any one of the preceding claims, comprising one or more flow-rate transducers (11) which can generate a signal representative of the flow-rate of water input into and/or the flow-rate of water output from the boiler (1), the flow-rate transducer (11) being in signal communication with the control unit (6), wherein the control unit (6) determines the drawn power (Pp) taken on the basis of the signal representative of the flow-rate sent by said flow-rate transducer (11).

4. A method according to any one of the preceding claims, comprising a first temperature probe (14) placed in the upper portion of the boiler (1), the first temperature probe (14) being in signal communication with the control unit (6) in order to send to the control unit (6) a signal representative of the temperature at which the water is taken from the boiler (1).

5. A method according to any one of the preceding claims, comprising a second temperature probe (13) placed in the vicinity of the inlet (12), the second temperature probe (13) being in signal communication with the control unit (6) in order to send to the control unit (6) a signal representative of the temperature at which the water is admitted to the boiler (1).

6. A method according to any one of the preceding claims wherein, if the drawn power Pp is defined as the power lost by the boiler (1) because of the replacement of hot water with cold water due to the supply of hot water for the user selected, the method comprises the following steps:
(b) comparing Pp with the maximum power Pmax that can be delivered by the heater;
(c1) if Pp≤Pmax, the control unit (6) sets Pe = Pp;
(c2) if Pp>Pmax, the control unit (6) sets Pe = Pmax.

7. A method according to the preceding claim wherein the control unit calculates and stores the variation over time of the energy not compensated for by the heater (2).

8. A method according to the preceding claim wherein the variation over time of the energy not compensated for is substantially equal to the integral of Pp-Pe over time.

9. A method according to the preceding claim wherein the control unit (6) sets Pe such that the energy not compensated for by the heater (2) is positive or zero.

10. A method according to any one of Claims 8 to 9 wherein the control unit (6) sets Pe>Pp solely to compensate for the energy not compensated for by the heater (2).

11. A method according to any one of the preceding claims wherein, in order to compensate for the energy not compensated for by the heater (2), the control unit sets Pe=Pmax.

12. A device for supplying hot beverages comprising a heating water device comprising
- a boiler (1) suitable for containing water and comprising an inlet (12) and an outlet (15) which are suitable, respectively, for introducing water into the boiler (1) and for removing water therefrom;
- a heater (2) suitable for suppling energy to the water contained in the boiler (1) so as to increase the temperature of the water;
- a control unit (6) which can generate a signal for the increase of the delivered power (Pe) supplied by the heater (2) and a signal for the reduction thereof;
- one or more flow-rate transducers (1) which can generate respective signals that are representative of the flow-rate of water input to and/or output from the boiler (1),
- the flow-rate transducer (11) being in signal communication with the control unit (6),
the control unit (6) being designed for generating the signals for the increase and/or reduction of the delivered power (Pe) delivered by the heater (2) by processing the signal that is representative of the flow-rate that is sent by the flow-rate transducer (11), **the processing taking place by means of a function stored in the control unit (6), characterised in that** the control unit (6) is also designed for:
- determining a value representative of the total energy not compensated for by the heater (2), which is substantially equal to the integral over time of the difference between the drawn power (Pp) taken from the boiler (1) and the delivered power (Pe) delivered by the heater (2);
wherein when the value representative of the total energy not compensated for by the heater (2) is equal to zero, the delivered power (Pe) is never greater than the drawn power (Pp).

## Patentansprüche

1. Verfahren zum Bereitstellen von heißen Getränken, das das Bereitstellen von heißem Wasser umfasst, wobei das Bereitstellen von heißem Wasser die folgenden Schritte umfasst:
(a) Bereitstellen einer Vorrichtung zum Erhitzen von Wasser, wobei diese Vorrichtung Folgendes umfasst:
- einen Boiler (1), der Wasser enthalten kann und einen Einlass (12) und einen Auslass (15) umfasst, die sich zum Einleiten von Wasser in den Boiler (1) beziehungsweise zum Entnehmen von Wasser aus ihm eignen;
- eine Heizvorrichtung (2), die dem in dem Boiler (1) enthaltenen Wasser Energie zuführen kann, um die Temperatur des Wassers zu erhöhen;
- eine Steuereinheit (6), die ein Signal zum Erhöhen der zugeführten Leistung (Pe), die von der Heizvorrichtung (2) geliefert wird, und ein Signal zum Senken derselben erzeugen kann;
- einen oder mehrere Durchflussmengen-Messwertaufnehmer (1), die jeweilige Signale erzeugen können, die repräsentativ für die Durchflussmenge von Wasser sind, das in den Boiler (1) eingegeben und/oder aus ihm ausgegeben wird,
- wobei der Durchflussmengen-Messwertaufnehmer (11) in Signalverbindung mit der Steuereinheit (6) steht,
wobei die Steuereinheit (6) die Signale zum Erhöhen und/oder Senken der zugeführten Leistung (Pe), die von der Heizvorrichtung (2) geliefert wird, durch Verarbeiten des für die Durchflussmenge repräsentativen Signals erzeugt, das vom Durchflussmengen-Messwertaufnehmer (11) übermittelt wird, wobei die Verarbeitung mit Hilfe einer in der Steuereinheit (6) gespeicherten Funktion erfolgt; **dadurch gekennzeichnet, dass**
die Steuereinheit (6) einen für die von der Heizvorrichtung (2) nicht kompensierte Gesamtenergie repräsentativen Wert bestimmt, der im Wesentlichen gleich dem Integral über die Zeit der Differenz zwischen der bezogenen Leistung (Pp), die vom Boiler (1) entnommen wird, und der zugeführten Leistung (Pe) ist, die von der Heizvorrichtung (2) geliefert wird;
wobei, wenn der für die von der Heizvorrichtung (2) nicht kompensierte Gesamtenergie repräsentative Wert gleich Null ist, die zugeführte Leistung (Pe) niemals größer als die bezogene Leistung (Pp) ist.

2. Verfahren nach dem vorhergehenden Anspruch, bei dem die Funktion den Zeitpunkt bestimmt, an dem die von der Heizvorrichtung (2) gelieferte zugeführte Leistung (Pe) erhöht und/oder gesenkt wird, indem sie einen oder mehrere unabhängige Parameter berücksichtigt, die aus der Gruppe ausgewählt sind, die Folgendes umfasst:
- die Durchflussmenge des in den Boiler (1) eingelassenen Wassers;
- die maximale Leistung (Pmax), die von der Heizvorrichtung (2) geliefert werden kann;
- die Wassertemperaturdifferenz zwischen dem Einlass zum Boiler (1) und dem Auslass aus dem Boiler (1).

3. Verfahren nach einem der vorhergehenden Ansprüche, das einen oder mehrere Durchflussmengen-Messwertaufnehmer (11) umfasst, die ein Signal erzeugen können, das repräsentativ für die Durchflussmenge von in den Boiler (1) eingegebenem Wasser und/oder die Durchflussmenge von aus ihm ausgegebenen Wasser ist, wobei die Durchflussmengen-Messwertaufnehmer (11) in Signalverbindung mit der Steuereinheit (6) stehen, wobei die Steuereinheit (6) die entnommene bezogene Leistung (Pp) auf Grundlage des Signals bestimmt, das repräsentativ für die von dem Durchflussmengen-Messwertaufnehmer (11) übermittelte Durchflussmenge ist.

4. Verfahren nach einem der vorhergehenden Ansprüche, das einen ersten Temperaturfühler (14) umfasst, der im oberen Abschnitt des Boilers (1) angeordnet ist, wobei der erste Temperaturfühler (14) in Signalverbindung mit der Steuereinheit (6) steht, um an die Steuereinheit (6) ein Signal zu senden, das repräsentativ für die Temperatur ist, mit der das Wasser dem Boiler (1) entnommen wird.

5. Verfahren nach einem der vorhergehenden Ansprüche, das einen zweiten Temperaturfühler (13) umfasst, der in der Nähe des Einlasses (12) angeordnet ist, wobei der zweite Temperaturfühler (13) in Signalverbindung mit der Steuereinheit (6) steht, um an die Steuereinheit (6) ein Signal zu senden, das repräsentativ für die Temperatur ist, mit der das Wasser in den Boiler (1) eingelassen wird.

6. Verfahren nach einem der vorhergehenden Ansprüche, wobei, wenn die bezogene Leistung Pp als die vom Boiler (1) wegen des Ersetzens von heißem Wasser durch kaltes Wasser aufgrund der Zufuhr von heißem Wasser für den gewählten Verbraucher verlorene Leistung definiert ist, das Verfahren die folgenden Schritte umfasst:
(b) Vergleichen von Pp mit der maximalen Leistung Pmax, die von der Heizvorrichtung geliefert werden kann;
(c1) wenn Pp≤Pmax, setzt die Steuereinheit (6) Pe = Pp;
(c2) wenn Pp>Pmax, setzt die Steuereinheit (6) Pe = Pmax.

7. Verfahren nach dem vorhergehenden Anspruch, bei dem die Steuereinheit die zeitliche Variation der nicht von der Heizvorrichtung (2) kompensierten Energie berechnet und speichert.

8. Verfahren nach dem vorhergehenden Anspruch, bei dem die zeitliche Variation der nicht kompensierten Energie im Wesentlichen gleich dem Integral über die Zeit von Pp-Pe ist.

9. Verfahren nach dem vorhergehenden Anspruch, bei dem die Steuereinheit (6) Pe derart festsetzt, dass die nicht von der Heizvorrichtung (2) kompensierte Energie positiv oder gleich Null ist.

10. Verfahren nach einem der Ansprüche von 8 bis 9, bei dem die Steuereinheit (6) Pe>Pp nur setzt, um die nicht von der Heizvorrichtung (2) kompensierte Energie zu kompensieren.

11. Verfahren nach einem der vorhergehenden Ansprüche, bei dem die Steuereinheit Pe=Pmax setzt, um die nicht von der Heizvorrichtung (2) kompensierte Energie zu kompensieren.

12. Vorrichtung zum Bereitstellen von heißen Getränken, die eine Wasserheizvorrichtung umfasst, die Folgendes umfasst:
- einen Boiler (1), der Wasser enthalten kann und einen Einlass (12) und einen Auslass (15) umfasst, die sich zum Einleiten von Wasser in den Boiler (1) beziehungsweise zum Entnehmen von Wasser aus ihm eignen;
- eine Heizvorrichtung (2), die dem in dem Boiler (1) enthaltenen Wasser Energie zuführen kann, um die Temperatur des Wassers zu erhöhen;
- eine Steuereinheit (6), die ein Signal zum Erhöhen der zugeführten Leistung (Pe), die von der Heizvorrichtung (2) geliefert wird, und ein Signal zum Senken derselben erzeugen kann;
- einen oder mehrere Durchflussmengen-Messwertaufnehmer (1), die jeweilige Signale erzeugen können, die repräsentativ für die Durchflussmenge von Wasser sind, das in den Boiler (1) eingegeben und/oder aus ihm ausgegeben wird,
- wobei der Durchflussmengen-Messwertaufnehmer (11) in Signalverbindung mit der Steuereinheit (6) steht,
wobei die Steuereinheit (6) gestaltet ist, um die Signale zum Erhöhen und/oder Senken der zugeführten Leistung (Pe), die von der Heizvorrichtung (2) geliefert wird, durch Verarbeiten des für die Durchflussmenge repräsentativen Signals zu erzeugen, das vom Durchflussmengen-Messwertaufnehmer (11) übermittelt wird, **wobei die Verarbeitung mit Hilfe einer in der Steuereinheit (6) gespeicherten Funktion erfolgt**, **dadurch gekennzeichnet, dass** die Steuereinheit (6) außerdem zu Folgendem gestaltet ist:
- Bestimmen eines für die von der Heizvorrichtung (2) nicht kompensierte Gesamtenergie repräsentativen Werts, der im Wesentlichen gleich dem Integral über die Zeit der Differenz zwischen der bezogenen Leistung (Pp), die vom Boiler (1) entnommen wird, und der zugeführten Leistung (Pe) ist, die von der Heizvorrichtung (2) geliefert wird;
wobei, wenn der für die von der Heizvorrichtung (2) nicht kompensierte Gesamtenergie repräsentative Wert gleich Null ist, die zugeführte Leistung (Pe) niemals größer als die bezogene Leistung (Pp) ist.

## Revendications

1. Un procédé pour délivrer des boissons chaudes comprenant la fourniture d'eau chaude, dans lequel la fourniture d'eau chaude comprend les étapes suivantes :
(a) la disposition d'un dispositif pour chauffer de l'eau, le dispositif comprenant :
- une chaudière (1) adaptée pour contenir de l'eau et comprenant une entrée (12) et une sortie (15) qui sont adaptées, respectivement, pour l'introduction d'eau dans la chaudière (1) et l'extraction d'eau de celle-ci ;
- un dispositif de chauffage (2) adapté pour fournir de l'énergie à l'eau contenue dans la chaudière (1) de manière à augmenter la température de l'eau ;
- une unité de commande (6) qui peut générer un signal pour l'augmentation de la puissance délivrée (Pe) fournie par le dispositif de chauffage (2) et un signal pour la réduction de celle-ci ;
- un ou plusieurs transducteurs de débit (1) qui peuvent générer des signaux respectifs qui sont représentatifs du débit d'entrée et/ou de sortie d'eau dans/de la chaudière (1),
- le transducteur de débit (11) étant en communication de signal avec l'unité de commande (6),
l'unité de commande (6) générant les signaux pour l'augmentation et/ou la réduction de la puissance délivrée (Pe) fournie par le dispositif de chauffage (2) en traitant le signal qui est représentatif du débit qui est transmis par le transducteur de débit (11), le traitement s'effectue au moyen d'une fonction stockée dans l'unité de commande (6) ; **caractérisé en ce que**
l'unité de commande (6) détermine une valeur représentative de l'énergie totale non compensée par le dispositif de chauffage (2), qui est sensiblement égale à l'intégrale dans le temps de la différence entre la puissance prélevée (Pp) prise à partir de la chaudière (1) et la puissance délivrée (Pe) fournie par le dispositif de chauffage (2) ;
dans lequel, quand la valeur représentative de l'énergie totale non compensée par le dispositif de chauffage (2) est égale à zéro, la puissance délivrée (Pe) n'est jamais supérieure à la puissance prélevée (Pp).

2. Un procédé selon la revendication précédente, dans lequel ladite fonction détermine le moment où la puissance délivrée (Pe) fournie par le dispositif de chauffage (2) est augmentée et/ou diminuée en considérant un ou plusieurs paramètres indépendants sélectionnés à partir du groupe comprenant :
- le débit de l'eau admise dans la chaudière (1),
- la puissance maximale (Pmax) qui peut être fournie par le dispositif de chauffage (2) ;
- la différence de température d'eau entre l'entrée dans la chaudière (1) et la sortie de la chaudière (1).

3. Un procédé selon l'une quelconque des revendications précédentes, comprenant un ou plusieurs transducteurs de débit (11) qui peuvent générer un signal représentatif du débit d'entrée d'eau et/ou du débit de sortie d'eau dans/de la chaudière (1), le transducteur de débit (11) étant en communication de signal avec l'unité de commande (6), dans lequel l'unité de commande (6) détermine la puissance prélevée (Pp) prise sur la base du signal représentatif du débit transmis par ledit transducteur de débit (11).

4. Un procédé selon l'une quelconque des revendications précédentes, comprenant une première sonde de température (14) placée dans la partie supérieure de la chaudière (1), la première sonde de température (14) étant en communication de signal avec l'unité de commande (6) de manière à transmettre à l'unité de commande (6) un signal représentatif de la température à laquelle l'eau est prélevée de la chaudière (1).

5. Un procédé selon l'une quelconque des revendications précédentes, comprenant une deuxième sonde de température (13) placée à proximité de l'entrée (12), la deuxième sonde de température (13) étant en communication de signal avec l'unité de commande (6) de manière à transmettre à l'unité de commande (6) un signal représentatif de la température à laquelle l'eau est admise dans la chaudière (1).

6. Un procédé selon l'une quelconque des revendications précédentes, dans lequel, si la puissance prélevée Pp est définie comme la puissance perdue par la chaudière (1) à cause du remplacement d'eau chaude par de l'eau froide en raison de la fourniture d'eau chaude sélectionnée pour l'utilisateur, le procédé comprend les étapes suivantes :
(b) la comparaison de Pp à la puissance maximale Pmax qui peut être fournie par le dispositif de chauffage,
(c1) si Pp ≤ Pmax, l'unité de commande (6) règle Pe = Pp ;
(c2) si Pp > Pmax, l'unité de commande (6) règle Pe = Pmax.

7. Un procédé selon la revendication précédente, dans lequel l'unité de commande calcule et stocke la variation dans le temps de l'énergie non compensée par le dispositif de chauffage (2).

8. Un procédé selon la revendication précédente, dans lequel la variation dans le temps de l'énergie non compensée est sensiblement égale à l'intégrale de Pp-Pe dans le temps.

9. Un procédé selon la revendication précédente, dans lequel l'unité de commande (6) règle Pe de manière que l'énergie non compensée par le dispositif de chauffage (2) soit positive ou nulle.

10. Un procédé selon l'une quelconque des revendications de 8 à 9, dans lequel l'unité de commande (6) règle Pe > Pp uniquement pour compenser l'énergie non compensée par le dispositif de chauffage (2).

11. Un procédé selon l'une quelconque des revendications précédentes, dans lequel, de manière à compenser l'énergie non compensée par le dispositif de chauffage (2), l'unité de commande (6) règle Pe = Pmax.

12. Un dispositif pour délivrer des boissons chaudes comprenant un dispositif de chauffage d'eau comprenant
- une chaudière (1) adaptée pour contenir de l'eau et comprenant une entrée (12) et une sortie (15) qui sont adaptées, respectivement, pour l'introduction d'eau dans la chaudière (1) et l'extraction d'eau de celle-ci ;
- un dispositif de chauffage (2) adapté pour fournir de l'énergie à l'eau contenue dans la chaudière (1) de manière à augmenter la température de l'eau ;
- une unité de commande (6) qui peut générer un signal pour l'augmentation de la puissance délivrée (Pe) fournie par le dispositif de chauffage (2) et un signal pour la réduction de celle-ci ;
- un ou plusieurs transducteurs de débit (1) qui peuvent générer des signaux respectifs qui sont représentatifs du débit d'entrée et/ou de sortie d'eau dans/de la chaudière (1),
- le transducteur de débit (11) étant en communication de signal avec l'unité de commande (6),
l'unité de commande (6) étant conçue pour générer les signaux pour l'augmentation et/ou la réduction de la puissance délivrée (Pe) fournie par le dispositif de chauffage (2) en traitant le signal qui est représentatif du débit qui est transmis par le transducteur de débit (11), le traitement s'effectue au moyen d'une fonction stockée dans l'unité de commande (6) ; **caractérisé en ce que** l'unité de commande (6) est également conçue pour :
déterminer une valeur représentative de l'énergie totale non compensée par le dispositif de chauffage (2), qui est sensiblement égale à l'intégrale dans le temps de la différence entre la puissance prélevée (Pp) prise à partir de la chaudière (1) et la puissance délivrée (Pe) fournie par le dispositif de chauffage (2) ;
dans lequel, quand la valeur représentative de l'énergie totale non compensée par le dispositif de chauffage (2) est égale à zéro, la puissance délivrée (Pe) n'est jamais supérieure à la puissance prélevée (Pp).
